# EUROPÄISCHE PATENTSCHRIFT

(11) **EP 3 863 402 B1**
(45) Veröffentlichungstag und Bekanntmachung des Hinweises auf die Patenterteilung: **11.06.2025**
(21) Anmeldenummer: 19790154.9
(22) Anmeldetag: 11.10.2019
(51) Int. Cl.: A01M 1/08

(54) **INSEKTENFANGVORRICHTUNG, VERFAHREN ZUM FANGEN VON INSEKTEN UND VERWENDUNG DER INSEKTENFANGVORRICHTUNG**
INSECT CAPTURING DEVICE, METHOD FOR CAPTURING INSECTS, AND USE OF THE INSECT CAPTURING DEVICE
DISPOSITIF POUR PIÉGER DES INSECTES, PROCÉDÉ POUR PIÉGER DES INSECTES ET UTILISATION DU DISPOSITIF POUR PIÉGER DES INSECTES

(30) Priorität: 12.10.2018 DE 102018125320
(43) Veröffentlichungstag der Anmeldung: 18.08.2021
(73) Patentinhaber: Webert, Thomas, 97833 Frammersbach (DE)
(72) Erfinder: Webert, Thomas, 97833 Frammersbach (DE)
(74) Vertreter: Metten, Karl-Heinz
(86) Internationale Anmeldenummer: PCT/EP2019/077667
(87) Internationale Veröffentlichungsnummer: WO 2020/074736

(56) Entgegenhaltungen:
- WO-A1-2005/032248
- CN-A- 109 287 591
- CN-U- 201 563 518
- US-A1- 2010 287 816

## Beschreibung

Die vorliegende Erfindung betrifft aktive Insektenfangvorrichtungen, mit welchen sich Insekten von einer Oberfläche entfernen lassen. Auch betroffen ist ein Verfahren zum Fangen von Insekten. Ferner betroffen ist auch die Verwendung der aktiven Insektenfangvorrichtungen für das aktive Fangen von Insekten.

Relevanten Stand der Technik bilden beispielsweise WO 2005/032248 A1, US 2010/287816 A1 und CN 201 563 518 U, sowie die folgenden Insektenfangvorrichtungen.

Die DE 123396 U aus dem Jahre 1900 offenbart einen Fliegenfänger, bei welchem die Fliegen durch ein in einem Behälter brennendes Licht in diesen hinein gelockt werden und dort verbrennen.

Die DE 155600 U aus dem Jahre 1903 offenbart eine Fangvorrichtung für Insekten, bei welcher zum Anlocken eine Lichtquelle und zu Festhalten klebende Fangflächen verwendet werden.

Die DE 270634 U aus dem Jahre 1912 offenbart eine Vorrichtung zum Fangen und Vernichten von Insekten mittels Saugwirkung.

Die DE 273005 U aus dem Jahre 1913 offenbart einen selbstleuchtenden Fliegenfänger.

Die DE 1294041 U aus dem Jahre 1934 offenbart ein mechanisch wirkendes Gerät zum Fangen von Insekten mittels Saugluft.

Auch die Kombination von Licht und Ventilator ist nicht gänzlich unbekannt.

Die DE 1413679 U aus dem Jahre 1937 offenbart eine Glühbirne, welcher sich Mücken annähern und durch einen Saugventilator weggesaugt werden.

Die DE 7140295 U aus dem Jahre 1971 offenbart eine Vorrichtung zum Entfernen von Insekten, wobei an der Entlüftungsanalage eine die Insekten dem Ventilatorluftstrom zuführende Lichtquelle angeordnet ist. Es wird beschrieben, dass die Insekten durch die Lichtquelle angezogen werden.

Die DE 2834972 U aus dem Jahre 1978 offenbart eine Fliegen- und Fangvorrichtung, wobei eine Vase einen Duftauffangbehälter und einen Saugventilator umfasst. Eine Lichtquelle wird genannt, aber die Funktion nicht genauer beschrieben.

Aus dem Stand der Technik ist es hinreichend bekannt, dass es Insekten gibt, die von Licht angezogen werden. Licht soll demnach das Lockmittel sein. Neuere biologische Studien gehen inzwischen davon aus, dass einige Insekten von Wärme und nicht von dem Licht angezogen werden, was die Eignung einiger Insektenfangvorrichtungen für bestimmte Insekten in Frage stellt. Mücken sind beispielsweise nachtaktiv und fliegen auf Lichtquellen üblicherweise nur zu, falls ein anderer Lockstoff vorhanden ist. Die genannten Vorrichtungen, Methoden und Verfahren des vorstehend genannten Stands der Technik beziehen sich zumeist auf passive Fangvorrichtungen, d.h. die Fangvorrichtungen sind für den Dauerbetrieb ausgelegt und sollen Insekten anlocken und dann einfangen oder vernichten. Zum Anlocken werden Wärme, Gerüche, Licht (bei Motten) und/oder Farben genutzt. Dieses Anlocken kann nur funktionieren, wenn das Insekt nicht beunruhigt wird bzw. verscheucht wird. Auch sind ist man beim Einfangen der Insekten mit solch passiven Fangvorrichtungen auf die Mithilfe der Insekten angewiesen. Diese müssen sich, um in die Fangvorrichtung zu gelangen, aktiv selbst in diese Fangvorrichtung bewegen. Mit einem mit Sexualhormonen beschichteten Klebestreifen ein Insekt aktiv einzufangen, dürfte mindestens so schwierig sein, wie mit einer herkömmlichen Zeitschrift eines zu erschlagen. Passive Fangvorrichtungen und -methoden sind daher dafür ausgelegt, stundenlang oder gar tagelang (passiv) auf der Lauer zu liegen und regelmäßig ungeeignet für eine Verwendung der Insektenfangvorrichtungen für das aktive Fangen von Insekten.

Aktive Insektenfangvorrichtung, beispielsweise in Form einer Fliegenklatsche oder eines Schmetterlingsnetzes, sind ebenfalls hinreichend bekannt.

Die DE 161732 aus dem Jahre 1904 offenbart beispielsweise eine Vorrichtung zum Fangen und Töten von Insekten, die an das Insekt langsam herangeführt wird. Hierfür ist der Behälter teilweise durchsichtig ausgestaltet und mit Flüssigkeit gefüllt. Aber auch in diesem Beispiel besteht noch die erhebliche Gefahr, dass das Insekt wegfliegt.

Ferner erfordern aktive Insektenfangvorrichtungen zumeist eine nicht unerhebliche Schnelligkeit und Geschicklichkeit. Durch Aufsetzen der Fangvorrichtungen auf eine Oberfläche, auf welcher sich das Insekt befindet, wird die Oberfläche oft verunreinigt, wenn das Insekt getötet wird. Ein Lebendfang ist häufig nicht vorgesehen.

Die vorliegende Erfindung hat es zur Aufgabe, die Nachteile des Stands der Technik zu überwinden und eine verbesserte aktive Fangvorrichtung bereitzustellen, mit welcher es möglich ist, Insekten aktiv von einer Oberfläche aufzunehmen, ohne dass diese davon fliegen und insbesondere auch ohne dass die Fangvorrichtung auf die Oberfläche aufgesetzt werden muss.

Aktive Insektenfangvorrichtung im Sinne der vorliegenden Erfindung bedeutet, dass ein aktives Bewegen des Insekts in die Fangvorrichtung nicht erforderlich ist, sondern der Nutzer der Fangvorrichtung das Insekt aktiv einfangen kann. Mit anderen Worten, der Nutzer kann mit der erfindungsgemäßen Insektenfangvorrichtung ein Insekt, insbesondere ein Insekt, das auf einer Oberfläche sitzt, einfangen bzw. jagen.

Es hat sich überraschenderweise gezeigt, dass ein langsames Annähern an die Insekten unter Einsatz mindestens einer Blendlichtquelle möglich ist. Üblicherweise wird versucht, sich Insekten anzunähern, indem entweder eine hohe Schnelligkeit zum Einsatz kommt (z.B. Prinzip der Fliegenklatsche) und/oder der Fangbehälter möglichst unauffällig ist (z.B. durchsichtiges Wasserglas), so dass eine unbemerkte Annäherung aufgrund der teilweise schlechten Sehfähigkeit der Insekten erleichtert werden soll. Vorliegend wurde jedoch, beispielsweise bei Schmeißfliegen, Stubenfliegen und Fruchtfliegen, festgestellt, dass ein direktes Anstrahlen und Blenden des Insekts mit einer Blendlichtquelle dazu führt, dass dieses sich überraschenderweise nicht fortbewegt, wenn ein geeignetes Objekt angenähert wird. Von einem unbemerkten Annähern kann dabei - zumindest aus menschlicher Perspektive - nicht gesprochen werden. Es ist kaum etwas Auffälligeres als eine Lichtquelle vorstellbar, aber offenbar fühlen sich die Insekten nicht hinreichend bedroht, um darauf zu reagieren. Ohne an eine Theorie gebunden zu sein, wird vermutet, dass zahlreiche Insekten evolutionär stärker auf Schatten als auf Bewegungen konditioniert sind. Der Fluchtreflex bei einer Fliegenklatsche könnte natürlich grundsätzlich auch auf eine Sensitivität gegenüber Bewegungen zurückführbar sein. Es wird nun jedoch angesichts des erfolgreichen Blendeffekts rückblickend vermutet, dass diese stärker auf Abschattungen reagieren als auf Bewegungen. In der Natur kommen künstliche Lichtquellen nicht vor und natürliche Lichtquellen, abgesehen von Himmelskörpern, sind sehr selten. Auch sind besagte Himmelskörper, beispielsweise die Sonne, regelmäßig keine Bedrohung, sondern indizieren, dass der Himmel frei ist und beispielsweise kein Vogel sich über dem Insekt befindet. Die mindestens eine Blendlichtquelle der vorliegenden Erfindung wird also nicht als bedrohlich wahrgenommen, blendet das Insekt aber, so dass man sich mit der Insektenfangvorrichtung und der Fangöffnung soweit an das Insekt annähern kann, dass es von der Insektenfalle erfasst, beispielsweise angesaugt, wird.

Die Aufgabe wird gelöst durch eine aktive Insektenfangvorrichtung gemäß des unabhängigen Anspruches 1, ein Kit gemäß des unabhängigen Anspruches 9, ein Verfahren gemäß des unabhängigen Anspruches 10 und eine Verwendung gemäß des unabhängigen Anspruches 14.

Erfindungsgemäß umfasst die aktive Insektenfangvorrichtung eine Fangöffnung mit einem Öffnungsrand, mindestens eine Blendlichtquelle und mindestens einen Aufnahmeraum mit mindestens einer Raumwandung, wobei die aktive Insektenfangvorrichtung ein, insbesondere entfernbarer, Staubsaugeraufsatz geeignet für einen Staubsauger mit einem Tragegriff ist.

Das Grundprinzip ist identisch zum bereits zuerst beschriebenen Lösungsvorschlag. Aber die Insektenfalle, d.h. jenes Element, welches das Insekt aufnimmt, festhält, tötet und/oder sonst auf irgendeine Weise unschädlich macht, ist bei dieser weiteren Lösung ein Staubsauger mit einem Tragegriff. Es kann sich um einen herkömmlichen Bodenstaubsauger, insbesondere der dafür ausgelegt ist mit dem Stromnetz zum Betrieb verbunden zu werden, oder einen portablen, insbesondere akkubetriebenen, Handstaubsauger handeln. Der herkömmliche Bodenstaubsauger hat üblicherweise einen Saugschlauch, an dessen Ende die Staubsaugeraufsätze austauschbar sind. Für einen solchen Saugschlauch ist der erfindungsgemäße Staubsaugeraufsatz vorzugsweise vorgesehen. Es sind aber auch austauschbare Staubsaugeraufsätze für Handstaubsauger hinreichend bekannt und in einer alternativen Ausgestaltung ist der erfindungsgemäße Staubsaugeraufsatz für einen solchen ausgelegt und eingerichtet. Ein Staubsauger im Sinne der vorliegenden Erfindung umfasst jedes Gerät, mit dem Luft durch ein Rohr oder dergleichen angesaugt werden kann, also beispielsweise einen Bodenstaubsauger oder, in einer bevorzugten Ausführungsform, portable Handstaubsauger, wie Autostaubsauger oder Tischstaubsauger. Grundsätzlich kommen hierfür vielfältigste Ausführungsformen in Betracht, beispielsweise Akkustaubsauger, beutellose Staubsauger, Industriestaubsauger oder Zyklonstaubsauger. Es ist auch möglich, andere Arten von Saugern für die erfindungsgemäße Insektenfangvorrichtung zu verwenden, wie beispielsweise Fenstersauger, Nass- oder Wassersauger, Aschesauger oder Laubsauger. Auch diese stellen Staubsauger der vorliegenden Erfindung dar.

Eine "aktive" Insektenfangvorrichtung im Sinne der Erfindung ist zu unterscheiden von eine "passiven" Insektenfangvorrichtung. Mit einer aktiven Insektenfangvorrichtung wird das Insekt bei der bestimmungsgemäßen Verwendung der Insektenfangvorrichtung aktiv gejagt, d.h. die aktive Insektenfangvorrichtung wird bei der bestimmungsgemäßen Verwendung zum Insekt geführt. Eine Fliegenklatsche ist ein Beispiel für eine solche aktive Insektenfangvorrichtung. Eine passive Insektenfangvorrichtung lockt hingegen Insekten an, d.h. die Insekten werden bei der bestimmungsgemäßen Verwendung zu der Insektenfangvorrichtung gelockt, währen die Insektenfangvorrichtung passiv, meist ortsfest, "abwartet". Eingangs wurden derartige Insektenfangvorrichtungen des Stands der Technik beschrieben. Eine aktive Insektenfangvorrichtung ist für einen solchen aktiven Einsatz ausgelegt und eingerichtet und braucht zumeist nur für eine sehr begrenzte Zeit von wenigen Minuten oder Sekunden elektrische Energie, um ein Insekt erfolgreich einzufangen und/oder zu töten, wobei es auch aktive Insektenfangvorrichtung ohne Energieverbrauch gibt (Fliegenklatsche). Eine aktive Insektenfangvorrichtung ist somit vorzugsweise für einen kurzeitigen Betrieb ausgelegt, d.h. mit der Fliegenklatsche wird zugeschlagen oder mit der Blendlichtquelle das Insekt geblendet und dann aktiv vom Nutzer aufgenommen. Die Aufnahme kann auch automatisiert erfolgen, beispielsweise durch eine Saugvorrichtung. Die passiven Insektenfangvorrichtungen müssen regelmäßig für einen Dauerbetrieb geeignet sein, da es eine erhebliche Zeit dauert, bis Insekten angelockt werden. Beispielhaft gibt es passive Insektenfangvorrichtungen, die Kohlenstoffdioxid und andere Lockstoffe kontinuierlich abgeben, um tausende von Mücken einzufangen und zu vernichten. Die vorliegende Erfindung betrifft aktive Insektenfangvorrichtungen.

"Vorne" oder "vor der Fangöffnung" bezeichnet im Sinne der Erfindung jene Richtung ausgehend von der Fangöffnung, in welcher sich der überwiegende restliche Teil der Insektenfangvorrichtung nicht erstreckt. Es handelt sich mithin um jene Richtung, in der das Insekt anzutreffen ist, wenn die Fangöffnung dem Insekt angenähert wird. "Hinten" oder "hinter der Fangöffnung" bezeichnet im Sinne der Erfindung jene Richtung in der die Insektenfangvorrichtung überwiegende angeordnet ist, insbesondere jene Richtung, in welcher der Aufnahmeraum liegt. Wenn sich ein Insekt von einer Position vor der Fangöffnung hinter die Fangöffnung bewegt, gelangt es in die Insektenfangvorrichtung, insbesondere in den Aufnahmeraum und später in die Insektenfalle. Wenn sich ein Insekt von einer Position hinter der Fangöffnung vor die Fangöffnung bewegt, gelangt es aus dem Aufnahmeraum hinaus und kann beispielsweise freigelassen werden.

Der "Blendkegel" im Sinne der vorliegenden Erfindung ist ein, vorzugsweise im Wesentlichen kegelförmiger Bereich, der von der Blendlichtquelle erhellt wird. Dieser, vorzugsweise kegelförmige, Bereich wird unmittelbar von der Blendlichtquelle beleuchtet und nicht etwa indirekt durch Beugung, Streuung oder Reflektion von Licht der Blendlichtquelle. Vorzugsweise ist die Blendlichtquelle dabei ein Scheinwerfer oder eine andere Leuchtquelle mit einem gerichteten Lichtstrahl. Wenn mehrere Blendlichtquellen vorhanden sind, bildet jede der Blendlichtquellen einen Einzelblendlichtkegel aus und die Summe dieser Einzelblendlichtkegel wird als "Blendkegel" im Sinne der vorliegenden Erfindung angesehen. Vorzugsweise ist es vorgesehen, dass die mindestens eine Blendlichtquelle einen Blendkegel in einem Bereich überwiegend vor der Fangöffnung ausbildet.

"Portabel" im Sinne der vorliegenden Erfindung ist eine Insektenfangvorrichtung, wenn diese durch einen Menschen getragen werden kann und vorzugsweise ausgelegt und eingerichtet ist, durch einen Menschen getragen zu werden, insbesondere an dem mindestens einen Tragegriff. In einigen Ausgestaltungen hat die Insektenfangvorrichtung ein Gewicht von weniger als 10 kg, vorzugsweise von weniger als 5 kg, insbesondere von weniger als 4 kg, ganz besonders bevorzugt von weniger als 2 kg. Die Insektenfangvorrichtung hat in einigen Ausgestaltungen ein Gewicht von 100 g bis 2000 g, insbesondere von 200 g bis 1700 g, insbesondere bevorzugt von 400 g bis 1500 g.

Wenn ein Areal, Bereich oder Insekt "unmittelbar" beleuchtet wird, bedeutet dies, dass Licht der Lichtquelle zumindest anteilig ohne Umwege auf besagtes Areal, besagten Bereich oder besagtes Insekt trifft, vorzugsweise dass zumindest einige der Photonen, insbesondere mindestens 25% und/oder mindestens 50% der von der Lichtquelle emittierten Photonen, auf linearem Weg von der Lichtquelle zu besagtem Areal, Bereich oder Insekt gelangen. Ein mittelbares oder indirektes Beleuchten kann hingegen auftreten, wenn Licht der Lichtquelle erst gestreut, reflektiert oder gebeugt werden muss, um auf ein Areal, Bereich oder Insekt zu treffen. Beispielsweise kann eine Lichtquelle hinter eine Ecke einen Bereich vor der Ecke mittelbar beleuchten. Die Beugung ist dabei auf die Welleneigenschaften zurückzuführen. Das Prinzip ist beispielsweise von Gebäuden bekannt, in welchen die Fenster erleuchtet sind, obgleich die Lichtquellen nicht sichtbar sind. Wenn ein Areal, Bereich oder Insekt "unmittelbar" beleuchtet wird, kann dies auch als "direktes" Beleuchten des Areals, Bereichs bzw. Insekts mit der Lichtquelle bezeichnet werden. Licht welches unmittelbar bzw. direkt von der Lichtquelle auf ein Objekt trifft, ist oftmals besser geeignet, eine maximale Blendwirkung zu erzielen. Beispielsweise kann man von der Sonne geblendet werden, wenn diese einem unmittelbar bzw. direkt in das Auge scheint (aber grundsätzlich kann ein Blenden beispielsweise auch durch Reflektionen erfolgen, was oftmals eine stärkere Lichtquelle erfordert).

Vorzugsweise umfasst die Insektenfangvorrichtung einen Aufnahmeraum. Grundsätzlich ist es auch denkbar, eine Fangöffnung vorzusehen, welche durch ein Gitter verschlossen ist, wobei das Gitter elektrisch geladen ist. Bei Kontakt sterben die Insekten. In diesem Fall ist beispielsweise ein Aufnahmeraum nicht zwingend erforderlich. Allerdings hat sich ein Aufnahmeraum als zweckmäßig erwiesen. Vorzugsweise umfasst besagter Aufnahmeraum einen, insbesondere zylindrischen, Innenbereich. Der Innenbereich kann länglich ausgestaltet sein, insbesondere ein tunnelförmiger Innenbereich sein.

Erfindungsgemäß bildet die mindestens eine Raumwandung besagten Aufnahmeraum in Form eines Aufnahmerohrs aus, insbesondere wobei die mindestens eine Raumwandung das Aufnahmerohr zumindest bereichsweise einen Querschnitt aufweist, vorzugsweise einen ovalen, runden oder vieleckigen, insbesondere rechteckigen, Querschnitt. Vorzugsweise hat der Querschnitt in einigen Ausgestaltungen zumindest teilweise entlang des Aufnahmeraums, insbesondere entlang der Längserstreckung des Aufnahmerohrs, einen konstante Querschnittsgeometrie und/oder konstante Querschnittsabmessungen und/oder konstante Querschnittskontur. Erfindungsgemäß ist es vorgesehen, dass die mindestens eine Raumwandung ein Aufnahmerohr ausbildet und die Fangöffnung endständig an dem Aufnahmerohr ausgebildet ist. Auch ist es bevorzugt, wenn das Aufnahmerohr starr ausgebildet ist. Obgleich biegsame und/oder flexible Aufnahmerohre geeignet sind, hat es sich als besonders vorteilhaft erwiesen starre Aufnahmerohre zu verwenden, welche sich nicht zerstörungsfrei biegen lassen, beispielsweise Aufnahmerohre aus einem spröden transparenten Hartkunststoff. Vorzugsweise ist der Aufnahmeraum als Aufnahmerohr ausgestaltet mit einem tunnelförmigen Innenbereich. Auch ist es bevorzugt, wenn der mittlere Durchmesser des Aufnahmerohrs um einen Faktor von mindestens 3, insbesondere mindestens 5, vorzugsweise mindestens 10, kleiner als die Länge des Aufnahmerohrs ist. Vorzugsweise hat das Aufnahmerohr einen mittleren Innen- und/oder Außendurchmesser von weniger als 10 cm, insbesondere von weniger als 7 cm, vorzugsweise von weniger als 4 cm. Bei einer besonders zweckmäßigen Ausführungsform der erfindungsgemäßen aktiven Insektenfangvorrichtung kann der Durchmesser der Fangöffnung, bzw. der Öffnungsrand der Fangöffnung oder der Aufnahmeraum, insbesondere das Aufnahmerohrs, dem Volumenstrom angepasst werden. Bei schwacher Leistung des verwendeten Staubsaugers, also einem geringeren Volumenstrom, ist es vorteilhaft, einen kleineren Durchmesser des Aufnahmeraums, insbesondere des Aufnahmerohrs, zu haben, bei hoher Leistung der verwendeten Staubsauger kann auch ein größerer Durchmesser des Aufnahmerohrs eingestellt werden. In einer zweckmäßigen Ausgestaltung der erfindungsgemäßen aktiven Insektenfangvorrichtung, insbesondere als Staubsaugeraufsatz, ist der Durchmesser des Aufnahmeraums , insbesondere des Aufnahmerohrs, variabel einstellbar, sodass der Aufsatz auf alle Arten von Staubsauger, unabhängig ihrer Leistung, aufgesetzt werden kann.

Die Ausgestaltung als Aufnahmerohr erlaubt es in besonders effizienter Weise, sich dem Insekt anzunähern. Der Nutzers und die Hand des Nutzers bleiben auf Distanz, während die Spitze des Aufnahmerohrs durch das Blendlicht der Blendlichtquelle quasi "unsichtbar" wird. Es ist effizienter, wenn besagtes Blendlicht nicht auch noch die Hand des Nutzers durch Blenden "unsichtbar" werden lassen muss.

Erfindungsgemäß liegt die mindestens eine Blendlichtquelle in dem Aufnahmeraum in Form eines Aufnahmerohrs der Insektenfangvorrichtung vor und leuchtet vorzugsweise durch die Fangöffnung hinaus. Auch ist es bevorzugt, wenn hinter der Fangöffnung die restliche Insektenfangvorrichtung vorliegt und vor der Fangöffnung das Insekt vor dem Einfangen vorliegen kann, wobei die mindestens eine Blendlichtquelle hinter der Fangöffnung vorliegt und durch die Fangöffnung hinausleuchtet. Dies sorgt für eine besonders gute Blendwirkung. Das Insekt wird direkt durch die mindestens eine Blendlichtquelle angestrahlt. Erfindungsgemäß leuchtet die Blendlichtquelle direkt durch die Fangöffnung hindurch und/oder ist hinter der Fangöffnung angeordnet. Ein direktes Hindurchleuchten bedeutet, dass Licht unmittelbar durch die Fangöffnung gelangt.

Bei der Insektenfalle handelt es sich in einer Ausgestaltung um eine Lebendfalle, d.h. Insekten werden überwiegend lebend gefangen. In einer weiteren Ausgestaltung handelt es sich um eine Falle, welche Insekten überwiegend tötet.

Erfindungsgemäß ist es vorgesehen, dass die mindestens eine Blendlichtquelle ausgelegt und eingerichtet ist, ein Areal vor der Fangöffnung unmittelbar zu bestrahlen. Die Blendlichtquelle kann Reflektoren umfassen, um das Licht in dieser Richtung zu bündeln. Das Grundprinzip ist von Taschenlampen und Autoscheinwerfern her bekannt. In einigen Ausgestaltungen ist vorgesehen, dass der Blendkegel 1 cm und/oder 3 cm und/oder 5 cm vor der Fangöffnung einen größeren mittleren Durchmesser als die Fangöffnung aufweist. In bevorzugten Ausgestaltungen ist der mittlere Durchmesser des Blendkegels beim Durchtritt durch die Fangöffnung kleiner als der Durchmesser der Fangöffnung und besonders bevorzugt auch noch in einem Abstand von der Fangöffnung, beispielsweise 1 cm und/oder 3 cm und/oder 5 cm vor der Fangöffnung, insbesondere bis zu einem Auftreffen des Lichtstrahls auf das Insekt bzw. den Augenbereich des Insekts. Vielfach ist es ausreichend, wenn der Kopf des Insekts beleuchtet wird, sodass die Blendwirkung nur um den Augenbereich der Insekten einsetzt. Demnach kann der Durchmesser des Blendkegels auch derart klein gewählt werden, dass er dem Durchmesser des Insekts, insbesondere dem Durchmesser des Insektenkopfes entspricht. Hierdurch kann sichergestellt werden, dass das Insekt den Öffnungsrand nicht wahrnimmt.

Erfindungsgemäß ist es vorgesehen, dass die mindestens eine Raumwandung und/oder Öffnungsrand zumindest bereichsweise transparent und/oder transluzent ist. Vorzugsweise ist die Fangöffnung zumindest bereichsweise durch die umlaufende transparente und/oder transluzente mindestens eine Raumwandung begrenzt. Vorzugsweise ist der Öffnungsrand der Fangöffnung gänzlich transparent und/oder transluzent.

Der Aufnahmeraum, insbesondere das Aufnahmerohr, ist vorzugsweise aus einem transparenten und/oder transluzenten Material ausgebildet. Der Aufnahmeraum kann beispielsweise umfassend einen transparenten und/oder transluzenten Kunststoff ausgebildet sein.

Vorzugsweise ist der mindestens eine Tragegriff jenseits des Aufnahmeraums angeordnet, insbesondere jenseits des Aufnahmeraums und auf einer von der Fangöffnung gegenüberliegenden Seite des Aufnahmeraums angeordnet. Es hat sich gezeigt, dass die beschriebene Position des Tragegriff dort besonders effektiv verhindert, dass das Insekt durch die Hand und/oder den Arm des Nutzers verschreckt wird, da der Griff weiter entfernt von der Fangöffnung ist. Es können auch mehrere Tragegriffe vorgesehen sein, wobei genau ein Tragegriff bevorzugt ist. Der Aufnahmeraum, insbesondere das Aufnahmerohr, kann in einigen Ausgestaltungen die Insektenfalle und/oder das Anschlussstück eines Staubsaugeraufsatzes mit der Fangöffnung verbinden. Mit dem Aufnahmeraum, insbesondere mit dem Aufnahmerohr, kann in besondere Maße sichergestellt werden, dass das Insekt nicht wegfliegt. Der Aufnahmeraum, insbesondere das Aufnahmerohr, verhindert in einer vorteilhaften Ausgestaltung, dass eine Annäherung der gesamten Insektenfangvorrichtung erfolgen muss. Auch wird verhindert, dass die Hand des Nutzers wahrgenommen wird, insbesondere wenn der mindestens eine Tragegriff sich weit hinter der Fangöffnung befindet, vorzugsweise jenseits des Aufnahmeraums, insbesondere bevorzugt jenseits des Aufnahmerohrs. Stattdessen nähert sich bei der bestimmungsgemäßen Verwendung ein vorzugsweise vergleichsweise dünner Aufnahmeraum, insbesondere in Form eines Aufnahmerohrs, dem Insekt auf der Oberfläche an, um das Insekt aufzunehmen und die restliche Insektenfangvorrichtung kann einen hinreichend Abstand waren. Vorzugsweise hat der Aufnahmeraum, insbesondere das Aufnahmerohr, eine Länge von mindestens 5 cm, insbesondere von mindestens 10 cm. Mittels des Aufnahmeraums, insbesondere in Form eines Aufnahmerohrs, werden Insekten besonders effizient geblendet. Auch ist der Blendkegel bei der mindestens einen Blendlichtquelle nicht beliebig breit ausgestaltbar, d.h. wenn die voluminöseren Bauteile der Insektenfalle direkt an das Insekt herangeführt werden müssten, ist es schwieriger, einen entsprechenden Blendkegel zuverlässig herzustellen.

In einigen Ausgestaltungen ist es vorgesehen, dass die Insektenfalle eine Ansaugvorrichtung umfasst, insbesondere welches einen Unterdruck erzeugt. Die Ansaugvorrichtung ist vorzugsweise als Ansauggebläse ausgebildet. Vorzugsweise wird die Ansaugvorrichtung mit einem Aufnahmerohr kombiniert, welches dann auch als Ansaugrohr bezeichnet werden kann und vorzugsweise Insekten ansaugt. Zwischen der Fangöffnung und der Ansaugvorrichtung, insbesondere dem Ansauggebläse, ist vorzugsweise ein Filter und/oder Auffangbehälter vorgesehen. In einigen Ausgestaltungen umfasst die Insektenfalle mindestens einen Filter und/oder Auffangbehälter, durch welchen der Ansaugvorrichtung angezogene Luft transportiert wird. Mit der Ansaugvorrichtung können Insekten angesaugt werden, insbesondere mittels des Ansaugrohrs. In einigen Ausgestaltungen ist der Aufnahmeraum bzw. das Aufnahmerohr ein Ansaugrohr, welches ausgelegt und eingerichtet ist, Insekten einzusaugen. Der in dieser Offenbarung beschriebene Aktivierungsschalter kann die Ansaugvorrichtung vorzugsweise einschalten.

Statt der Ansaugvorrichtung oder zusätzlich zu der Ansaugvorrichtung kann auch ein Käfigfalle vorgesehen sein. Die Käfigfalle steht in einigen Ausführungsformen der Insektenfangvorrichtung unter Spannung, um das Insekt zu töten oder bewusstlos werden zu lassen. Es kann vorgesehen sein, dass die Käfigfalle vorgespannt ist, um hervorzuschnellen. Der in dieser Offenbarung beschriebene Aktivierungsschalter kann diesen Vorgang vorzugsweise auslösen. Auch die Kombination einer Käfigfalle mit einer Ansaugvorrichtung ist denkbar, wobei die Luft durch die Gitter der Käfigfalle gesogen wird, um das Insekt in die Käfigfalle zu befördern.

Es ist auch möglich, Insekten lebend einzufangen, insbesondere wenn der Auffangbehälter entsprechend weich ausgestaltet ist. In einer Ausgestaltung ist der Auffangbehälter ein Auffangbeutel, wobei die Beutelwand luftdurchlässig ist. In einer weiteren Ausgestaltung ist der Auffangbehälter ein Auffangraum mit einem Eingang und einem Ausgang, wobei die Luft durch den Eingang in den Auffangbehälter eindringt und durch den Ausgang entweicht und ein Ausgangsfilter die Luft filtriert, insbesondere auch Insekten daran hindert durch den Ausgang zu entkommen.

Vorzugsweise ist es in einigen Ausgestaltungen vorgesehen, dass der Auffangbehälter sich öffnen lässt, um Insekten freizulassen. Beispielsweise kann eine Freisetzungsklappe oder - tür vorhanden sein, welche Zugang zum Auffangbehälter gewährt. Es kann auch ein Freisetzungsschalter vorgesehen sein, um die Freisetzungsklappe oder -tür auszulösen. Der Freisetzungsschalter kann als Druckknopf, Kippschalter, Drehschalter, Sensorfläche, Pistolenabzug oder auf andere Art ausgestaltet sein.

In einigen Ausgestaltungen ist auch ein Aktivierungsschalter vorgesehen, um die Insektenfalle zu aktivieren. Der mindestens eine Tragegriff kann besagten Aktivierungsschalter umfassen. Der Vorteil der Anbringung am mindestens einen Tragegriff ist, dass eine Aktivierung erfolgen kann, wenn die Insektenfangvorrichtung bereits an das Insekt weitgehend angenähert ist. Der Aktivierungsschalter kann als Druckknopf, Kippschalter, Drehschalter oder auf andere Art ausgestaltet sein. Beispielsweise ist auch ein Abzug wie bei einer Pistole denkbar oder eine Sensorfläche, welche auf Berührungen reagiert. Ein Aktivierungsschalter im Sinne der vorliegenden Erfindung ist ein, vorzugsweise mechanisches, Element, welches bei der Aktivierung, insbesondere durch eine menschliche Hand, die Insektenfangvorrichtung aktiviert, beispielsweise durch das Einschalten einer Ansaugvorrichtung, insbesondere eines Ansauggebläses.

Auch ein Lichtschalter für die Blendlichtquelle kann vorgesehen sein, insbesondere am mindestens einen Tragegriff. Der Lichtschalter kann als Druckknopf, Kippschalter, Drehschalter, Sensorfläche, Pistolenabzug oder auf andere Art ausgestaltet sein. Es ist auch denkbar, dass die Blendlichtquelle automatische aktiviert wird oder bei Betätigung des Aktivierungsschalters für die Insektenfalle. Vorzugsweise werden in einer Ausgestaltung die Blendlichtquelle und die Ansaugvorrichtung durch einen gemeinsamen Aktivierungsschalter aktiviert.

Der vorstehend beschriebene Aktivierungsschalter und/oder Lichtschalter kann in einigen Ausgestaltungen wieder automatisch in eine Ausgangsposition zurückkehren. Es kann sich beispielsweise um einen Dreh- oder Kippschalter handeln, der in seine Ausgangsposition zurückkehrt.

Auch kann statt oder zusätzlich zu einem Lichtschalter eine Lichtaktivierungseinheit vorgesehen sein, welche durch die Ansaugvorrichtung aktiviert wird. Es kann sich um ein Widerstandselement handeln, welches bei aktiviertem Luftstrom der Ansaugvorrichtung durch den Luftstrom neu orientiert wird. Das Widerstandselement kann beispielsweise ein Plättchen oder eine Platte sein, welches durch Luftstrom umgelegt wird. Wenn die Ansaugvorrichtung aktiviert wird, ändert das Widerstandselement seine Orientierung und aktiviert dabei, insbesondere mittels Hebelkraft, die Lichtaktivierungseinheit.

Der vorstehend beschriebene Aktivierungsschalter und/oder Lichtschalter kann in einigen Ausgestaltungen, wie vorstehend beschrieben, am mindestens einen Tragegriff angeordnet sein und/oder Bestandteil des mindestens einen Tragegriffs sein. Auch ist es denkbar, dass der Aktivierungsschalter und/oder Lichtschalter als Drehschalter ausgebildet ist, insbesondere wobei das Aufnahmerohr drehbar ist und durch Drehung des Aufnahmerohrs der Drehschalter betätigt wird. Der besagte Drehschalter kehrt vorzugsweise wieder automatisch in eine Ausgangsposition zurück.

In einigen Ausgestaltungen ist der Öffnungsrand der Fangöffnung so ausgebildet, dass dieser sich auf einer ebenen Oberfläche aufsetzen lässt. Vorzugsweise weist der Öffnungsrand mindestens zwei gegenüberliegende Bereiche auf, welche gleichzeitig die ebene Oberfläche beim Aufsetzen kontaktieren können. Besonders bevorzugt ist es, wenn der gesamte Öffnungsrand in eine Ebene liegt und/oder besagte ebene Oberfläche umlaufende kontaktieren kann. Es kann vorgesehen sein, dass das Leuchtmittel sich hinter der Öffnung befindet, um dies zu erleichtern.

Der Auffangbehälter kann, insbesondere am Eingang, eine Einwegsperre umfassen. Die Einwegsperre lässt Insekten nur in einer Richtung passieren, d.h. die Insekten werden durch die Einwegsperre hindurch eingesogen, können aber danach nicht mehr in umgekehrter Richtung durch die Einwegsperre gelangen. Bei der Einwegsperre kann es sich um eine Rückschlagklappe handeln, insbesondere welche sich im Fluidstrom der Ansaugvorrichtung selbstständig öffnet und selbstständig schließt, wenn der Fluidstrom nicht vorhanden ist, d.h. die Ansaugvorrichtung ausgeschaltet ist. Auch ist es denkbar, dass ein enger Zugang als Einwegsperre eingesetzt wird, der von Insekten nicht gefunden wird, insbesondere wenn der Zugang nicht frei zugänglich ist. Auch Fasern, Haare oder Borsten, insbesondere aus Kunststoff, können so ausgerichtet werden, dass diese nur in eine Richtung durchquert werden können und somit eine Einwegsperre ausbilden.

Vorzugsweise ist es vorgesehen, dass die Ansaugvorrichtung, insbesondere das Ansauggebläse, eine Strömungsmaschine umfasst, beispielsweise mit Rotorblättern, Propellern und/oder Ventilatoren. Mit der Strömungsmaschine kann Luft angesaugt werden. Auch ist es bevorzugt, wenn das durch das Getriebe aufgesogene Fluid, insbesondere die angesaugte Luft, erst den Auffangbehälter passiert, um zu der besagten Strömungsmaschine zu gelangen. Dies verhindert, dass Insekten in den Bereich der Strömungsmaschine gelangen, was wiederum unterbindet, dass die Insekten verletzt werden oder die Strömungsmaschine beschädigt wird.

Vorzugsweise ist es vorgesehen, dass die mindestens eine Blendlichtquelle durch mindestens eine, insbesondere genau eine, LED ausgebildet ist oder durch eine Vielzahl von, vorzugsweise miteinander verbundenen, LEDs oder durch genau eine LED oder durch genau zwei, vorzugsweise miteinander verbundenen, LEDs. Überraschenderweise eignen sich LEDs in besonderem Maße für die Insektenfalle. Insekten werden meist nicht von dem Licht, sondern von der Wärme angelockt. Mithin sollten LEDs sich schlechter als herkömmliche Glühbirnen eignen. Es wurde jedoch festgestellt, dass die Blendwirkung, wie vorstehend beschrieben, für LEDs durchaus eintritt. Die Insekten werden nicht angelockt, sondern geblendet. Wenn die Glühbirne zu warm ist, kann dies Insekten durch eine Veränderung der Temperatur auch warnen, so dass LEDs besonders geeignet sind.

Vorzugsweise ist es vorgesehen, dass die LED Licht aus dem UV-Bereich abgibt. Zusätzlich kann auch sichtbares Licht abgegeben werden. In einer Ausgestaltung wird überwiegend Licht aus dem UV-Bereich abgegeben, insbesondere ausschließlich Licht aus dem UV-Bereich.

Um zu vermeiden, dass der Blendkegel der Blendlichtquelle die Innenwandung des Aufnahmeraums bestrahlt, kann eine Linse bzw. ein Linsensystem zur Fokusierung des Lichtstrahls bzw. der LED-Blendlichtquelle eingesetzt werden. Die Blendlichtquelle, wie beispielsweise die LED, kann direkt an der Fangöffnung oder insbesondere hinter dieser im Aufnahmeraum, insbesondere im Aufnahmerohr, positioniert vorliegen. Für die Platzierung einer Blendlichtquelle weiter hinten im Aufnahmerohr wäre ein steilerer Blendkegel erforderlich. Für diese Ausführungsform einer erfindungsgemäßen aktiven Insektenfangvorrichtung kann die Blendlichtquelle einen Laser umfassen oder als Laser ausgebildet sein, wobei dieser vorzugsweise ebenfalls Licht aus dem UV-Bereich abgibt. Bei Verwendung eines Lasers kann in einer zweckmäßigen Ausführungsform daher die Blendlichtquelle und somit die gesamte Insektenfangvorrichtung weiter beabstandet an das Insekt herangeführt werden, um dieses gleichwohl auch ausreichend blenden zu können. Alternativ oder zusätzlich ist es auch möglich, die Blendlichtquelle in Form eines Lasers weiter hinten im Aufnahmeraum, insbesondere im Aufnahmerohr, zu platzieren oder dieses Aufnahmerohr dementsprechend lang auszubilden.

In einer weiteren Ausführungsform der erfindungsgemäßen aktiven Insektenfangvorrichtung umfasst diese mindestens einen Helligkeitssensor zur Bestimmung der Helligkeit in der Umgebung des Insekts. Dieser Helligkeitssensor erfasst dabei sowohl künstliches Licht im Innenbereich, als auch Tageslicht im Außenbereich. Die erfindungsgemäßen aktiven Insektenfangvorrichtung umfasst weiterhin mindestens eine Datenverarbeitungsvorrichtung zum Abgleich der Helligkeit in der Umgebung des Insekts mit der Beleuchtungsstärke des Blendlichts der Blendlichtquelle oder den einstellbaren Beleuchtungsstärken der Blendlichtquelle. Hierfür umfasst die erfindungsgemäße aktive Insektenfangvorrichtung ferner mindestens eine Regulierungseinheit zum Einstellen der Beleuchtungsstärke der Blendlichtquelle, beispielsweise in Form eines Reglers oder Schalters. Im Falle von Witterung oder Dämmerung (also eher dunkler Umgebung) kann so die Beleuchtungsstärke der Blendlichtquelle weniger stark eingestellt werden, als beispielsweise bei sehr hellem künstlichem Licht oder Sonnenschein. Auf diese Weise ist die Blendlichtquelle nur so hell wie nötig, um im Vergleich zu der Helligkeit in der Umgebung eine ausreichende Blendwirkung zu erzielen bzw. einzustellen, was Energiekosten spart und die Lebenszeit der Blendlichtquelle verlängert. In einer zweckmäßigen Ausgestaltung kann die Beleuchtungsstärke der Blendlichtquelle oder die einstellbaren Beleuchtungsstärken der Blendlichtquelle als Referenzwert(e) in der Datenverarbeitungsvorrichtung gespeichert sein.

In einer weiteren Ausführungsform ist es vorgesehen, dass die mindestens eine Datenverarbeitungsvorrichtung aufgrund des Abgleichs der ermittelten Helligkeit in der Umgebung des Insekts mit der Beleuchtungsstärke der Blendlichtquelle oder den einstellbaren Beleuchtungsstärken der Blendlichtquelle eine Fangwahrscheinlichkeit des Insekts ermittelt. In einer zweckmäßigen Ausgestaltung ist die mindestens eine Datenverarbeitungsvorrichtung mit einer Anzeigevorrichtung, insbesondere einem Display, verbunden oder verbindbar oder ausgestattet, welches die Fangwahrscheinlichkeit des Insekts anzeigt bzw. ob ein aktives Fangen des Insekts möglich bzw. erfolgsversprechend ist. Bei zu geringer Differenz zwischen der Helligkeit in der Umgebung des Insekts und der Beleuchtungsstärke der Blendlichtquelle wird das Insekt nicht ausreichend geblendet, sodass das Insekt die Fangöffnung bemerken und mit einem Fluchtinstinkt reagieren wird. Bei ausreichender Differenz zwischen der Helligkeit in der Umgebung des Insekts und der Beleuchtungsstärke der Blendlichtquelle wird das Insekt ausreichend stark geblendet, der Fluchtinstinkt wird unterdrückt und das Insekt lässt sich problemlos einfangen. Die Anzeigevorrichtung kann dabei z.B. als "ja/nein"-System oder als Ampelsystem, insbesondere unter Verwendung einer grünen, gelben und roten LED-Anzeige, ausgebildet sein.

In einigen Ausgestaltungen ist die mindestens eine Blendlichtquelle innerhalb des Aufnahmeraums angeordnet.

Vorzugsweise ist ein Zentrierungshalter vorgesehen, der die mindestens eine Blendlichtquelle an der Fangöffnung positioniert, insbesondere so dass das Blendlicht aus Richtung der Fangöffnung und/oder des Öffnungsrandes scheint und/oder durch die Fangöffnung hindurchscheint und/oder so dass ein Objekt vor der Fangöffnung unmittelbar von der Blendlichtquelle angestrahlt wird.

Der Zentrierungshalter kann ein, insbesondere länglicher, Halter sein, an welchem die Blendlichtquelle befestigt ist. Der Zentrierungshalter kann vorzugsweise durch eine Stange ausgebildet sein, insbesondere welche sich nach hinten weg von der Fangöffnung erstreckt. Auch ist eine Querstange denkbar, an welcher die Blendlichtquelle befestigt ist, wobei die Querstange mit dem Öffnungsrand und/oder mit der mindestens einen Raumwandung verbunden ist. Es ist es jedoch besonders bevorzugt, wenn der Zentrierungshalter sich ausgehend von der Blendlichtquelle nach hinten weg von der Fangöffnung erstreckt. Dies verhindert besonders effektiv, dass der Schatten des Zentrierungshalters von einem Insekt wahrgenommen wird. Der Zentrierungshalters kann zudem ganz oder teilweise aus einem transparenten oder transluzenten Material ausgebildet sein.

Es kann sich um eine oder mehrere Blendlichtquellen handeln, welche sich beabstandet vom Öffnungsrand, insbesondere im Zentrum oder nahe am Zentrum der Fangöffnung, befindet. Solche Blendlichtquellen können auch als Zentralblendlichtquellen bezeichnet werden. Vorzugsweise ist besagte mindestens eine Zentralblendlichtquelle nicht mehr als 2 cm vom Zentrum der Fangöffnung entfernt. Vorzugsweise ist besagte mindestens eine Zentralblendlichtquelle nicht mehr als 20%, insbesondere 10%, des mittleren Öffnungsdurchmessers der Fangöffnung vom Zentrum der Fangöffnung entfernt.

In einigen Ausgestaltungen ist eine Energieerzeugungsvorrichtung umfasst, mit welcher die mindestens eine Blendlichtquelle mit Energie versorgt wird.

Die Energieerzeugungsvorrichtung kann eine Solarzelle sein. Es kann sich beispielsweise um eine Solarzelle am mindestens einen Tragegriff oder am Aufnahmerohr handeln. Es handelt sich dabei vorzugsweise um Licht, welches von der Sonne, von einer Innenbeleuchtung oder von einem Staubsauger abgegeben wird.

Es kann sich aber auch um eine Energieerzeugungsmaschine handeln, welche das Abfallen der inneren Energie eines strömenden Fluids, insbesondere der durch einen Staubsauger eingesogenen Luft, in elektrische Leistung umwandelt, insbesondere umfassend eine Turbine und/oder einen Generator. Die Energieerzeugungsmaschine nutzt dabei vorzugsweise die innere Energie der Luft, welche durch die Fangöffnung strömt. Diese Ausgestaltungen haben sich insbesondere bei Staubsaugeraufsätzen bewährt. Der Staubsaugeraufsatz muss dann vorzugsweise nicht gesondert mit Energie versorgt werden, sondern versorgt die mindestens eine Blendlichtquelle selbst mit der erzeugten Energie. Dies kann mit einer Batterie kombiniert werden.

In einigen Ausgestaltungen ist ein Energiespeicher, insbesondere eine Batterie, umfasst, mit welcher die mindestens eine Blendlichtquelle mit Energie versorgt wird. Hierbei kann es sich um einen Energiespeicher mit mindestens einer Primärzelle oder mit mindestens einer Sekundärzelle handeln, wobei letztere bevorzugt sind. Vorzugsweise ist der Energiespeicher ein Akkumulator, insbesondere mit einer oder mehrerer Sekundärzellen. Hierdurch kann das Gerät auch besonders portabel eingesetzt werden (es gibt aber auch portable Handgeräte, die am Stromnetz hängen). Bei passiven Insektenfangvorrichtungen kommt eine Batterie zum Betrieb regelmäßig nicht in Betracht, da Insekten durch den Dauereinsatz angelockt werden und die Energiemenge einer Batterie für den Dauereinsatz üblicherweise nicht geeignet ist.

Die mindestens eine Blendlichtquelle ist vorzugsweise als Scheinwerfer ausgebildet, insbesondere der durch die Fangöffnung hindurch oder vom Öffnungsrand weg abstrahlt. Dies bewirkt ein besonders effizientes Blenden von Insekten. Das Blendlicht kann hierbei auch als Blendscheinwerfer bezeichnet werden. Vorzugsweise wird das Licht durch Reflektoren gebündelt in Richtung der Fangöffnung und/oder auf einen Bereich vor der Fangöffnung.

In einigen Ausgestaltungen ist es vorgesehen, dass die mindestens eine Blendlichtquelle Blendlicht in die mindestens eine Raumwandung einstrahlen kann, welches am umlaufenden Öffnungsrand abgestrahlt wird. Auch kann es vorgesehen sein, dass die mindestens eine Raumwandung zu diesem Zweck ein lichtleitendes Material umfasst, vorzugsweise Glasfaserkabel.

Die mindestens eine Blendlichtquelle befindet sich in einer Ausgestaltung hinter der Ebene der Fangöffnung, insbesondere ist durch den Zentrierungshalter hinter der Ebene der Fangöffnung positioniert. Es ist grundsätzlich auch möglich, dass die Blendlichtquelle in der Ebene oder vor der Ebene der Fangöffnung angeordnet ist. Die Ebene der Fangöffnung wird durch den Verlauf des Öffnungsrandes definiert. Vorzugsweise liegt der Öffnungsrand in einer Ebene. Falls dies nicht der Fall ist, wird die Lage der Ebene gemittelt, so dass die Punkte des Öffnungsrands im Durchschnitt einen möglichst kleinen Abstand von der Ebene haben. Wenn die Blendlichtquelle hinter der Ebene der Fangöffnung angeordnet ist, kann der Öffnungsrand an einer Oberfläche aufsetzen, ohne dass die Gefahr besteht, dass die Blendlichtquelle durch die Oberfläche beschädigt und/oder das Insekt durch die Blendlichtquelle verletzt wird. In zweckmäßigen Ausgestaltungsformen ist die Blendlichtquelle bis zu 200cm, vorzugsweise bis zu 5 cm, bevorzugt 0,01 bis 3 cm, besonders bevorzugt 0,1 bis 2 cm und insbesondere 0,5 bis 1 cm, hinter der Ebene der Fangöffnung angeordnet. Dieser Abstände haben sich als besonders geeignet erwiesen. Wenn der Abstand größer wird, insbesondere größer als 5 cm, d.h. die Blendlichtquelle noch weiter nach hinten versetzt wird, ist die Gefahr erhöht, dass der Blendkegel durch den Öffnungsrand der Fangöffnung zu sehr abgeschirmt wird. Diese Gefahr ist auch besonders dann erhöht, wenn ein dünnes Aufnahmerohr eingesetzt wird und der Nutzer mit der Hand wackelt. Bei Abständen oberhalb von 5 cm und bis zu 200 cm hat es sich als sehr vorteilhaft erwiesen, auf Blendlichtquellen zurückzugreifen, die mit einer Linse oder einem Linsensystem oder einer Laser-Blendlichtquelle ausgestattet sind. Insbesondere bei der Verwendung von leuchtstarken LED-Blendlichtquellen oder Lasern als Blendlichtquelle kann beispielsweise auch das Staubsaugerrohr eines herkömmlichen Bodenstaubsaugers als Aufnahmeraum verwendet werden.

Die mindestens eine Blendlichtquelle kann durch eine Vielzahl von umlaufenden Blendlichtquellen, insbesondere LEDs, ausgebildet sein. Jede der LEDs ist dabei eine Blendlichtquelle, welche mit weiteren Blendlichtquellen verbunden ist. Drei, vier, fünf oder noch mehr Blendlichtquellen sind möglich. Auch ist es denkbar, dass die mindestens eine Blendlichtquelle umlaufend kontinuierlich ringförmig ausgebildet ist, beispielsweise durch ein kontinuierliches OLED-Material. Eine ringförmige Anordnung der Blendlichtquellen kann beispielsweise auch durch eine Vielzahl von LEDs erreicht werden, die ringförmig angeordnet sind. Unter "ringförmig" ist jede geschlossene Bahn zu verstehen, wobei diese beispielsweise kreisrund, oval, aber auch rechteckig ausgestaltet sein kann. Als besonders geeignet haben sich kreisrunde oder ovale Anordnungen erwiesen. In einer Ausgestaltung sind 3 bis 10 Blendlichtquellen, insbesondere LEDs, ringförmig angeordnet.

Die Blendlichtquelle, insbesondere umfassend LEDs, gibt in einigen Ausgestaltungen sichtbares Licht ab, also Licht umfassend Wellenlängen zwischen 380 und 780 nm. Es kann aber auch vorgesehen sein, dass die Blendlichtquelle alternativ oder zusätzlich Licht im ultravioletten, beispielsweise von 100 bis 380 nm, und/oder im infraroten Wellenlängenbereich umfasst. Als besonders geeignet hat sich ein Blendlichtquellen erwiesen, welche Wellenlängen aus dem Bereich von 100 bis 400 nm, insbesondere 250 bis 380 nm, insbesondere bevorzugt von 300 bis 350 nm, emittieren. Auch kann es in einer zweckmäßigen Ausgestaltung vorgesehen sein, dass die Blendlichtquelle überwiegend Licht im Bereich von 100 bis 500 nm abgibt, insbesondere von 200 bis 450 nm, vorzugsweise wobei mindestens 50%, insbesondere 6o%, insbesondere bevorzugt 8o%, der von der Blendlichtquelle emittierten Photonen eine Energie aufweisen, welcher einem der vorstehend genannten Wellenlängenbereiche entspricht. In einer Ausgestaltung kann es vorgesehen sein, dass der Anteil an sichtbarem Licht kleiner als 50% ist.

Die Erfindung betrifft in einer weiteren Ausgestaltung nicht nur den Staubsaugeraufsatz, sondern auch ein Kit umfassend die in dieser Offenbarung beschriebene erfindungsgemäße Insektenfangvorrichtung in Form eines Staubsaugeraufsatzes und einen Staubsauger, der mit dem Staubsaugeraufsatz verbunden werden kann, insbesondere wobei die Insektenfangvorrichtung endständig an einem Staubsaugerrohr des Staubsaugers befestigt ist.

Die vorliegende Erfindung betrifft auch ein Verfahren zum Fangen von Insekten mit einer Insektenfangvorrichtung, insbesondere mit der vorstehend beschriebenen erfindungsgemäßen aktiven Insektenfangvorrichtung, umfassend mindestens eine Blendlichtquelle und eine Insektenfalle, wobei das Verfahren die folgenden Schritte aufweist:
1) Lokalisieren eines Insekts auf einer Oberfläche,
2) Blenden des Insekts mit der mindestens einen Blendlichtquelle,
3) weiteres Annähern der Insektenfangvorrichtung an das geblendete Insekt,
4) Aufnahme des Insekts mit der Insektenfalle.

Die Aktivierung der Insektenfalle, beispielsweise der Ansaugvorrichtung einer Insektenfalle, kann in Schritt 4), aber auch in Schritt 1), 2), oder 3) erfolgen. Vorzugsweise ist es jedoch vorgesehen, dass die Aktivierung der Insektenfalle vor dem Schritt 2) oder während des Schritts 2) erfolgt. Hierdurch wird vermieden, dass das Insekt durch die Aktivierung selbst aufgescheucht wird. Grundsätzlich ist auch eine spätere Aktivierung denkbar, beispielsweise in Schritt 4), wobei das Insekt dann bereits im Wirkungsbereich der Falle ist, wenn die Aktivierung erfolgt. Es hat sich aber gezeigt, dass vielfach eine frühzeitige Aktivierung zweckmäßig ist. Überraschenderweise werden die Insekten beispielsweise durch eine aktivierte Ansaugvorrichtung der Insektenfalle nicht verscheucht. Es wurde beobachtet, dass sich Insekten oftmals sogar bei einem Luftzug an einer Oberfläche festkrallen. Ohne an eine Theorie gebunden zu sein, ist dies möglicherweise darauf zurückzuführen, dass Windböen in der freien Natur eine Gefahr darstellen, indem diese Insekten in Teiche mit Fischen oder Spinnennetze geschleudert werden. Dies kann zu einer Anpassung geführt haben, so dass zumindest einige Insekten sich festkrallen, wenn sich eine Ansaugvorrichtung nähert und sie geblendet sind. Die Ansaugvorrichtung entspricht als möglicherweise evolutionär - aus Sicht des Insekts gesehen - einer Windböe und die Blendlichtquelle der Sonne. Diese Theorie muss nicht stimmen, allerdings hat sich das Verfahren als erfolgreich beim Fangen für Insekten erwiesen.

Besonders bevorzugt ist dabei ein Verfahren, bei dem das Fangen des Insekts auf einer Oberfläche "kontaktlos" erfolgt, also kein Kontakt zwischen der Oberfläche und der Insektenfangvorrichtung vorliegt. Beim Fangen des Insekts muss die erfindungsgemäße Insektenfangvorrichtung nicht auf die Oberfläche aufgesetzt werden, sondern kann auch aus einer gewissen Entfernung eingesaugt werden. Dies ist vorteilhaft, wenn sich die Insekten auf nicht-ebenen Oberflächen oder gar empfindlichen Oberflächen befinden, wie abgerundete Glasoberflächen, Pflanzen, Lebensmitteln oder dergleichen. Wie bereits beschrieben ist auch hierbei beim Einfangen kein aktives Bewegen der Insekten erforderlich, sogar wenn sich diese festkrallen, können die Insekten aufgrund der mit der erfindungsgemäßen Insektenfangvorrichtung erzeugten Blendlichtwirkung und dem damit unterbundenen Fluchtinstinkt regelmäßig problemlos eingesaugt werden.

Um die Insekten besser fangen zu können, ist es in einigen Ausgestaltungen des erfindungsgemäßen Verfahrens zum Fangen von Insekten mit einer erfindungsgemäßen Insektenfangvorrichtung auch vorteilhaft, die Immobilität, beispielsweise durch Festkrallen, der Insekten kurz vor dem Einsaugen zu minimieren, insbesondere durch ein erneutes Auslösen eines Fluchtreflexes kurz vor dem Einsaugen. Dabei wird das Insekt mit der mindestens einen Blendlichtquelle über den abgestrahlten Blendkegel geblendet, wobei sich der Nutzer während des Blendens des Insekts mit der Insektenfangvorrichtung annähert. Sobald das Aufnahmerohr kurz über dem Insekt ist, wobei der Blendkegel immer noch auf das Insekt, insbesondere den Kopf des Insekts gerichtet ist, kann ein Fluchtreflex ausgelöst werden. Zum einen ist es möglich, den Blendkegel, insbesondere wenn dessen mittlerer Durchmesser kleiner als die Fangöffnung ist, in der Art zu verschieben, dass dieser statt auf den Kopf des Insekts nun neben das Insekt zeigt. Aufgrund der nicht mehr vorhandenen Blendwirkung und dem "plötzlichen" Erscheinen eines Lichtkegels in direkter Umgebung, wird ein Fluchtreflex des Insekts ausgelöst. Das Insekt krallt sich nicht mehr auf der Oberfläche fest, sondern stößt sich von dieser durch ein "Springen" ab, bevor es zum Flug ansetzt. Während dieses Aufspringens des Insekts kann dieses eingesaugt werden. Des Weiteren ist es möglich, das Insekt mit dem Rand oder der Innenseite des Ansaugrohrs, insbesondere von der Seite auf das Insekt zu bewegend, anzustoßen. Hierbei kann, muss aber nicht, das insekt weiterhin im blendkegel verbleiben. Durch den physischen Kontakt sowie gegebenenfalls dem plötzlichen Auftreten von seitlichem Schatten durch das Ansaugrohr, welches nun in das Blickfeld des Insekts rückt, kann ebenfalls ein Fluchtreflex ausgelöst werden. Auch hierbei reagiert das Insekt zunächst mit einem "Wegspringen", wobei das Insekt eingesaugt werden kann.

In einer weiteren Ausgestaltung des erfindungsgemäßen Verfahrens zum Fangen von Insekten mit einer Insektenfangvorrichtung, insbesondere mit der vorstehend beschriebenen erfindungsgemäßen aktiven Insektenfangvorrichtung, umfasst dieses ferner die Schritte:
a) Ermittlung der Helligkeit in der Umgebung des Insekts,
b) Abgleich der ermittelten Helligkeit in der Umgebung des Insekts mit der Beleuchtungsstärke der Blendlichtquelle oder den einstellbaren Beleuchtungsstärken der Blendlichtquelle,
c) Ermittlung einer Fangwahrscheinlichkeit aufgrund des durchgeführten Abgleichs gemäß b),
d) Anzeige einer Fangwahrscheinlichkeit.

Diese Schritte finden dabei vorzugsweise zwischen dem Lokalisieren eines Insekts auf einer Oberfläche (Schritt 1) und dem Blenden des Insekts mit der mindestens einen Blendlichtquelle (Schritt 2) statt.

Die vorliegende Erfindung betrifft ferner die Verwendung einer Insektenfangvorrichtung, insbesondere wie diese vorstehend beschrieben wurde, umfassend mindestens eine Blendlichtquelle für das aktive Fangen von Insekten, insbesondere wobei die Insekten vor dem Einfangen unmittelbar mit einer Blendlichtquelle angestrahlt werden. Die vorliegende Erfindung betrifft auch die Verwendung der vorstehend beschriebenen Insektenfangvorrichtung zum Einfangen von Insekten mittels eines Staubsaugers, an welchem besagte Insektenfangvorrichtung angebracht ist, vorzugsweise an dessen Staubsaugerrohr besagte Insektenfangvorrichtung angebracht ist.

Mit der vorliegenden Erfindung wurde überraschenderweise festgestellt, dass sich aktive Insektenfangvorrichtungen konstruieren lassen, die Insekten aufsammeln können, ohne dass eine besonders hohe Geschwindigkeit und Geschicklichkeit erforderlich ist. Weiterhin hat sich überraschenderweise gezeigt, dass dabei keine aktive Mithilfe in Form von aktiver Bewegung des Insekts und auch kein direktes Aufsetzen der Insektenfangvorrichtung auf eine Oberfläche, auf der sich das Insekt befindet, nötig sind. Die Insektenfangvorrichtung eignet sich für Stubenfliegen, Schmeißfliegen, Fruchtfliegen und andere Insekten. Das Prinzip ist von einigen Säugetieren, beispielsweise Rehen, die im Scheinwerferlicht eines Autos stehen bleiben, in vergleichbarer Form nicht gänzlich unbekannt, wobei dort die Konsequenz des Autounfalls unerwünscht ist. Selbst falls die Insekten im letzten Moment wegspringen und/oder wegfliegen, nähern sie sich dabei zumeist erst einmal der Fangöffnung, so dass die Gefahr in den Wirkungsbereich der Falle zu kommen, sich nochmals vergrößert. Auch scheint es oftmals ein Instinkt zu sein, in Richtung der Lichtquelle zu fliehen, wobei diese den vermeintlichen Ausgang aus der Falle aufzeigen kann. Im Ergebnis konnte so mit der vorliegenden Erfindung überraschend erfolgreich Insekten eingefangen und/oder getötet werden.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert werden, ohne dadurch die Erfindung zu beschränken.

Dabei zeigt:
- Figur 1: eine schematische Querschnittsansicht einer weiteren Ausführungsform der aktiven Insektenfangvorrichtung in Form eines Staubsaugeraufsatzes;
- Figur 2: eine schematische Querschnittsansicht einer weiteren Ausführungsform der aktiven Insektenfangvorrichtung in Form eines Staubsaugeraufsatzes;
- Figur 3: eine schematische Querschnittsansicht einer weiteren Ausführungsform der aktiven Insektenfangvorrichtung umfassend eine Käfigfalle; und
- Figur 4: eine Prinzipskizze einer weiteren Ausführungsform der aktiven Insektenfangvorrichtung.

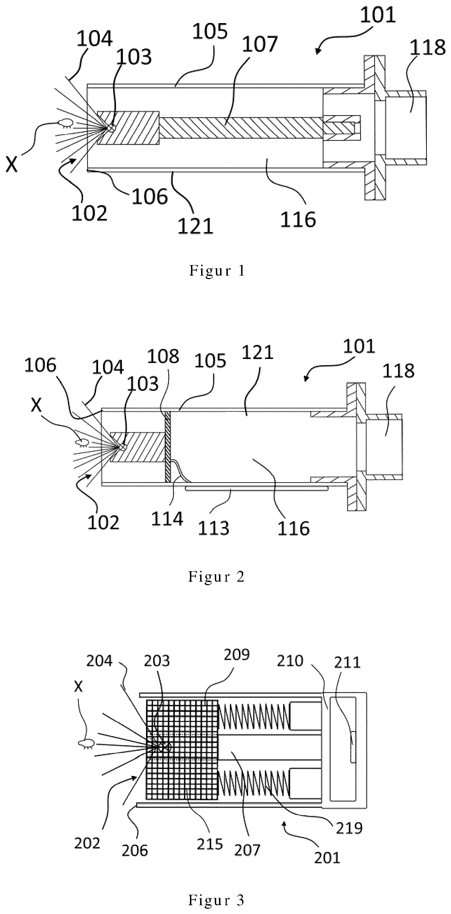

Figur 1 zeigt die schematische Querschnittsansicht einer weiteren Ausführungsform der aktiven Insektenfangvorrichtung 101 umfassend eine Fangöffnung 102 mit einem Öffnungsrand 106, mindestens einen Aufnahmeraum 121 mit mindestens einer Raumwandung 105, mindestens eine Blendlichtquelle 103. Eine Insektenfalle ist nicht gezeigt, da es sich um eine aktive Insektenfangvorrichtung 101 in Form eines Staubsaugeraufsatzes handelt, und der Staubsauger gegebenenfalls eine Insektenfalle ausbildet. Staubsauger umfassen üblicherweise eine Ansaugvorrichtung, welche einen Unterdruck erzeugt. Die mindestens eine Blendlichtquelle 103 wird durch einen Zentrierungshalter 107 in Form einer Stange im zentralen Bereich der Fangöffnung 102 positioniert. Die mindestens eine Blendlichtquelle 103 gibt das Blendlicht 104 in Richtung der Fangöffnung 102 ab, so dass das Insekt X geblendet werden kann. Die Insektenfangvorrichtung 101 in Form eines Staubsaugeraufsatzes umfasst einen Anschlussstück 118 zur Anbringung eines Staubsaugerrohrs. Zwischen der Fangöffnung 102 und dem Anschlussstück 118 ist der Innenbereich 116 des Aufnahmeraums 121 vorgesehen.

Figur 2 zeigt die schematische Querschnittsansicht einer weiteren Ausführungsform der aktiven Insektenfangvorrichtung 101 umfassend eine Fangöffnung 102 mit einem Öffnungsrand 106, mindestens einen Aufnahmeraum 121 mit mindestens einer Raumwandung 105, mindestens eine Blendlichtquelle 103. Eine Insektenfalle ist nicht gezeigt, da es sich um eine aktive Insektenfangvorrichtung 101 in Form eines Staubsaugeraufsatzes handelt, wobei der zugehörige Staubsauger die eigentliche Falle für Insekten ausbilden kann. Die mindestens eine Blendlichtquelle 103 wird durch einen Zentrierungshalter in Form einer Querstange 108 im zentralen Bereich der Fangöffnung 102 positioniert. Die mindestens eine Blendlichtquelle 103 gibt das Blendlicht 104 in Richtung der Fangöffnung 102 ab, so dass das Insekt X geblendet werden kann. Die Insektenfangvorrichtung 101 in Form eines Staubsaugeraufsatzes umfasst einen Anschlussstück 118 zur Anbringung eines Staubsaugerrohrs. Zwischen der Fangöffnung 102 und dem Anschlussstück 118 ist der Innenbereich 116 vorgesehen. Die mindestens eine Blendlichtquelle 103 wird über eine Kabel 114 von einer Solarzelle 113 mit Strom versorgt.

Figur 3 zeigt die schematische Querschnittsansicht einer weiteren Ausführungsform der aktiven Insektenfangvorrichtung 201 umfassend eine Fangöffnung 202 mit einem Öffnungsrand 206 und mindestens eine Blendlichtquelle 203. Die Insektenfalle 209 umfasst in dieser Ausgestaltung eine Käfigfalle 215 und die Federn 219. Die Käfigfalle 215 kann aus ihrer Ursprungsposition hervorspringen, um ein Insekt einzufangen. Hierfür ist ein Traggriff 210 mit einem Aktivierungsschalter 211 vorgesehen. Die Käfigfalle 215 ist in einer vorgespannten Position gezeigt, in welcher die Federn 219 komprimiert sind. Wenn der Aktivierungsschalter 211 betätigt wird, löst sich die Käfigfalle 215 und die Federn 219 entspannen sich, so dass die Käfigfalle 215 nach vorne gedrückt wird. Er schnellt dann über den Öffnungsrand 206 hinaus, um ein Insekt X einzufangen, welches von dem Blendlicht 204 der mindestens einen Blendlichtquelle 203 geblendet wurde. Die mindestens eine Blendlichtquelle 203 wird durch einen Zentrierungshalter 207 in Form eines Stabs im zentralen Bereich der Fangöffnung 202 positioniert. Die Käfigfalle kann unter elektrischer Spannung stehen, um das Insekt zu töten. Die Käfigfalle ist in einem Aufnahmeraum angeordnet.

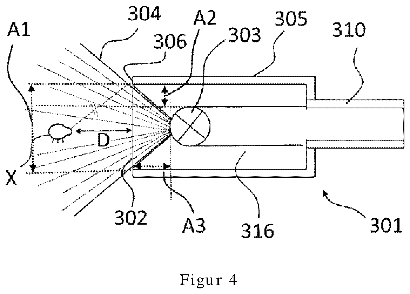

Figur 4 ist eine Prinzipskizze zu einer Ausführungsform in Sinne der vorliegenden Erfindung. Das Insekt X befindet sich in einer Distanz D von der durch den Öffnungsrand 306 definierten Fangöffnung 302. Das Blendlicht 304 bildet einen Blendkegel, durch welchen das Insekt geblendet wird und so den Öffnungsrand 306 nicht wahrnehmen kann. Daher bewegt sich das Insekt nicht fort, wenn die Insektenfangvorrichtung 301 auf dieses zu bewegt wird. Der Nutzer kann dabei die Insektenfangvorrichtung am Tragegriff 310 halten. Der Abstand A1 ist dabei der inneren Durchmesser des Innenbereichs 316. Der Abstand A2 ist der Abstand zwischen der mindestens einen Blendlichtquelle 303 und der Raumwandung 305. Der Abstand A2 ist geeignet für den Durchlass von Insekten. A3 ist der Abstand des Öffnungsrandes 306 zu der Blendlichtquelle 303. Hierbei ist es bevorzugt, wenn dieser Abstand mindestens 0,5 cm beträgt.

Die in der voranstehenden Beschreibung, den Ansprüchen sowie den Zeichnungen offenbarten Merkmale der Erfindung können sowohl einzeln als auch in jeder beliebigen Kombination für die Verwirklichung der Erfindung in ihren verschiedenen Ausführungsformen wesentlich sein.

## Patentansprüche

1. Aktive Insektenfangvorrichtung umfassend eine Fangöffnung mit einem Öffnungsrand, mindestens eine Blendlichtquelle und mindestens einen Aufnahmeraum mit mindestens einer Raumwandung,
wobei die aktive Insektenfangvorrichtung ein, insbesondere entfernbarer, Staubsaugeraufsatz für einen Staubsauger mit einem Tragegriff ist,
wobei der Aufnahmeraum ein Aufnahmerohr ist und die Fangöffnung endständig an dem Aufnahmerohr ausgebildet ist,
wobei die mindestens eine Blendlichtquelle direkt durch die Fangöffnung hindurchleuchtet,
wobei die mindestens eine Blendlichtquelle ausgelegt und eingerichtet ist, ein Areal vor der Fangöffnung unmittelbar zu bestrahlen und
wobei die mindestens eine Raumwandung und/oder der Öffnungsrand zumindest bereichsweise transparent und/oder transluzent ist und
wobei die Blendlichtquelle hinter der Fangöffnung und/oder im Aufnahmeraum angeordnet ist.

2. Aktive Insektenfangvorrichtung nach Anspruch 1, **dadurch gekennzeichnet, dass** die Insektenfalle eine Ansaugvorrichtung umfasst, welche vorzugsweise einen Unterdruck erzeugt.

3. Aktive Insektenfangvorrichtung nach Anspruch 2, **dadurch gekennzeichnet, dass** diese mindestens einen Filter und/oder Auffangbehälter umfasst, durch welchen von der Ansaugvorrichtung angezogene Luft transportiert wird, vorzugsweise wobei der Auffangbehälter geöffnet werden kann, um Insekten freizulassen.

4. Aktive Insektenfangvorrichtung nach einem der vorangehenden Ansprüche,
**dadurch gekennzeichnet, dass**
die mindestens eine Blendlichtquelle durch mindestens eine, insbesondere eine, LED ausgebildet ist oder durch eine Vielzahl von, insbesondere miteinander verbundenen, LEDs, vorzugsweise wobei die LED Licht aus dem UV-Bereich abgibt.

5. Aktive Insektenfangvorrichtung nach einem der vorangehenden Ansprüche,
**dadurch gekennzeichnet, dass**
die mindestens eine Blendlichtquelle durch einen Laser ausgebildet ist oder diesen umfasst, vorzugsweise wobei der Laser Licht aus dem UV-Bereich abgibt.

6. Aktive Insektenfangvorrichtung nach einem der vorangehenden Ansprüche, ferner umfassend
mindestens einen Helligkeitssensor zur Ermittlung der Helligkeit, insbesondere in der Umgebung des Insekts,
mindestens eine Datenverarbeitungsvorrichtung eingerichtet und ausgelegt für den Abgleich der, insbesondere mit dem mindestens einen Helligkeitssensor ermittelten, Helligkeit in der Umgebung des Insekts mit der Beleuchtungsstärke der Blendlichtquelle oder den, insbesondere einstellbaren, Beleuchtungsstärken der Blendlichtquelle,
und gegebenenfalls mindestens eine Regulierungseinheit zur Einstellung der Beleuchtungsstärke der Blendlichtquelle und/oder gegebenenfalls eine Anzeige- oder Ausgabevorrichtung.

7. Aktive Insektenfangvorrichtung nach Anspruch 6, **dadurch gekennzeichnet, dass** die mindestens eine Datenverarbeitungsvorrichtung eingerichtet und ausgelegt ist, um über den Abgleich der Helligkeit in der Umgebung des Insekts mit der Beleuchtungsstärke des Blendlichts der Blendlichtquelle eine Fangwahrscheinlichkeit des Insekts zu ermitteln, wobei die Datenverarbeitungsvorrichtung vorzugsweise mit der Anzeigevorrichtung, insbesondere einem Display, oder der Ausgabevorrichtung verbunden oder verbindbar ist, die jeweils ausgelegt und eingerichtet sind, die Fangwahrscheinlichkeit anzuzeigen oder anzugeben.

8. Aktive Insektenfangvorrichtung nach einem der vorangehenden Ansprüche, ferner umfassend
eine Energieerzeugungsvorrichtung und/oder einen Energiespeicher, mit welcher die mindestens eine Blendlichtquelle mit Energie versorgt wird.

9. Kit umfassend die aktive Insektenfangvorrichtung nach einem der Ansprüche 1 bis 8 und einen Staubsauger, insbesondere wobei die Insektenfangvorrichtung endständig an einem Staubsaugerrohr befestigbar oder befestigt ist.

10. Verfahren zum Fangen von Insekten mit einer Insektenfangvorrichtung, insbesondere mit der aktiven Insektenfangvorrichtung nach einem der Ansprüche 1 bis 8 oder dem Kit nach Anspruch 9, umfassend mindestens eine Blendlichtquelle und eine Insektenfalle, wobei das Verfahren die folgenden Schritte aufweist:
1) Lokalisieren eines Insekts auf einer Oberfläche,
2) Blenden des Insekts mit der mindestens einen Blendlichtquelle,
3) weiteres Annähern der Insektenfangvorrichtung an das geblendete Insekt,
4) Aufnahme des Insekts mit der Insektenfalle.

11. Verfahren nach Anspruch 10, **dadurch gekennzeichnet, dass** das Fangen des Insekts kein Aufsetzen der Insektenfangvorrichtung, insbesondere der Fangöffnung, auf der Oberfläche erfordert.

12. Verfahren nach Anspruch 10 oder 11, **dadurch gekennzeichnet, dass** zwischen den Schritten 3) und 4) ein Fluchtreflex des Insekts durch Anstoßen des Insekts mit dem Aufnahmerohr und/oder durch den Wegfall des Blendkegels ausgelöst wird.

13. Verfahren nach einem der Ansprüche 10 bis 12, ferner umfassend die Schritte, insbesondere zwischen den Schritten 1) und 2):
a) Ermittlung der Helligkeit in der Umgebung des Insekts,
b) Abgleich der ermittelten Helligkeit in der Umgebung des Insekts mit der Beleuchtungsstärke der Blendlichtquelle oder den, insbesondere einstellbaren, Beleuchtungsstärken der Blendlichtquelle,
c) Ermittlung einer Fangwahrscheinlichkeit aufgrund des durchgeführten Abgleichs gemäß b),
d) Anzeige oder Ausgabe der ermittelten Fangwahrscheinlichkeit.

14. Verwendung einer Insektenfangvorrichtung, insbesondere nach einem der Ansprüche 1 bis 8, oder eines Kits nach Anspruch 9 umfassend mindestens eine Blendlichtquelle für das aktive Fangen von Insekten, vorzugsweise wobei das Insekt vor dem Fangen mit der Blendlichtquelle geblendet wird.

15. Verwendung nach Anspruch 14, **dadurch gekennzeichnet, dass**
es sich um ein Insektenfangvorrichtung nach einem der Ansprüche 1 bis 8 oder um ein Kit nach Anspruch 9 handelt und eine Verwendung zum Einfangen von Insekten mittels eines Staubsaugers erfolgt, an welchem die Insektenfangvorrichtung angebracht ist.

## Claims

1. An active insect capturing device comprising a capture opening having an opening edge, at least one glare light source, and at least one receiving chamber having at least one chamber wall,
wherein the active insect capturing device is an, in particular removable, vacuum cleaner attachment for a vacuum cleaner and has a carrying handle,
wherein the receiving chamber is a receiving tube and the capture opening is formed on an end of the receiving tube,
wherein the at least one glare light source shines directly through the capture opening, wherein the at least one glare light source is adapted and arranged for directly illuminating a zone in front of the capture opening, and
wherein the at least one chamber wall and/or the opening edge are/is transparent and/or translucent, at least in regions, and
wherein the glare light source is located behind the capture opening and/or in the receiving chamber.

2. The active insect capturing device according to claim 1, **characterized in that** the insect trap comprises a suction device which preferably generates a negative pressure.

3. The active insect capturing device according to Claim 2, **characterized in that** said device comprises at least one filter and/or collection container through which air aspirated by the suction device is transported, preferably wherein the collection container can be opened in order to release insects.

4. The active insect capturing device according to any one of the preceding claims, **characterized in that**
the at least one glare light source is formed by at least one, in particular one, LED or by a plurality of, in particular interconnected, LEDs, wherein the LED preferably emits light in the UV range.

5. The active insect capturing device according to any one of the preceding claims, **characterized in that**
the at least one glare light source is formed by or comprises a laser, wherein the laser preferably emits light in the UV range.

6. The active insect capturing device according to any one of the preceding claims, further comprising
at least one brightness sensor for determining the brightness, in particular in the surroundings of the insect,
at least one data processing device arranged and adapted for comparing the brightness in the surroundings of the insect, in particular determined with the at least one brightness sensor, to the lighting intensity of the glare light source or to the, in particular adjustable, lighting intensities of the glare light source,
and optionally at least one control unit for adjusting the lighting intensity of the glare light source and/or optionally an indicator or output device.

7. The active insect capturing device according to Claim 6, **characterized in that** the at least one data processing device is arranged and adapted to determine a probability of capturing the insect based on the comparison of the brightness in the surroundings of the insect to the lighting intensity of the glare light of the glare light source, wherein the data processing device is preferably connected or connectable to the indicator device, in particular to a display, or to the output device, which are adapted and arranged to indicate or output, respectively, the capture probability.

8. The active insect capturing device according to any one of the preceding claims, further comprising
an energy generating device and/or an energy storage unit with which the at least one glare light source is supplied with energy.

9. A kit comprising the active insect capturing device according to any one of Claims 1 to 8 and a vacuum cleaner, in particular wherein the insect capturing device is fastenable or fastened to an end of a vacuum cleaner tube.

10. A method for capturing insects with an insect capturing device, in particular with the active insect capturing device according to any one of Claims 1 to 8 or with the kit according to Claim 9, comprising at least one glare light source and one insect trap, wherein the method has the following steps:
1) Locating an insect on a surface,
2) Blinding the insect with the at least one glare light source,
3) Moving the insect capturing device closer to the blinded insect,
4) Capturing the insect with the insect trap.

11. The method according to Claim 10, **characterized in that**
the capturing of the insect does not require setting the insect capturing device, in particular the capture opening, on the surface.

12. The method according to Claim 10 or 11, **characterized in that**
an escape reflex of the insect is triggered between steps 3) and 4) by nudging the insect with the receiving tube and/or by removing the blinding cone.

13. The method according to any one of the claims 10 to 12, further comprising, in particular between steps 1) and 2), the following steps:
a) Determination of the brightness in the surroundings of the insect,
b) Comparison of the determined brightness in the surroundings of the insect to the lighting intensity of the glare light source or to the, in particular adjustable, lighting intensities of the glare light source,
c) Determination of a capture probability on the basis of the comparison performed according to b),
d) Display or output of the determined capture probability.

14. Use of an insect capturing device, in particular according to any one of Claims 1 to 8, or of a kit according to Claim 9 comprising at least one glare light source for actively capturing insects, preferably wherein the insect is blinded with the glare light source prior to capture.

15. The use according to Claim 14, **characterized in that** an insect capturing device according to any one of Claims 1 to 8 or a kit according to Claim 9 is involved, and a use occurs for capturing insects by means of a vacuum cleaner, on which the insect capturing device is mounted.

## Revendications

1. Dispositif actif de capture d'insectes comprenant une ouverture de capture avec un bord d'ouverture, au moins une source de lumière éblouissante et au moins un espace de réception avec au moins une paroi de pièce,
dans lequel le dispositif actif de capture d'insectes est un embout d'aspirateur, en particulier démontable, pour un aspirateur avec une poignée de transport,
dans lequel l'espace de réception est un tube de réception et l'ouverture de capture est réalisée à l'extrémité du tube de réception,
dans lequel l'au moins une source de lumière éblouissante éclaire directement à travers l'ouverture de capture,
dans lequel l'au moins une source de lumière éblouissante est conçue et agencée pour irradier directement une zone devant l'ouverture de capture et
dans lequel l'au moins une paroi de pièce et/ou le bord d'ouverture est transparent et/ou translucide au moins par endroits et
dans lequel la source de lumière éblouissante est disposée derrière l'ouverture de capture et/ou dans l'espace de réception.

2. Dispositif actif de capture d'insectes selon la revendication 1, **caractérisé en ce que** le piège à insectes comprend un dispositif d'aspiration qui génère de préférence une dépression.

3. Dispositif actif de capture d'insectes selon la revendication 2, **caractérisé en ce que** celui-ci comprend au moins un filtre et/ou un récipient de capture à travers lequel l'air aspiré par le dispositif d'aspiration est transporté, de préférence dans lequel le récipient de capture peut être ouvert pour laisser les insectes libres.

4. Dispositif actif de capture d'insectes selon l'une quelconque des revendications précédentes, **caractérisé en ce que**
l'au moins une source de lumière éblouissante est réalisée par au moins une LED, en particulier une LED, ou par une pluralité de LED, en particulier reliées les unes aux autres, de préférence dans lequel la LED émet de la lumière dans la plage UV.

5. Dispositif actif de capture d'insectes selon l'une quelconque des revendications précédentes, **caractérisé en ce que**
l'au moins une source de lumière éblouissante est réalisée par un laser ou comprend celui-ci, de préférence dans lequel le laser émet de la lumière dans la plage UV.

6. Dispositif actif de capture d'insectes selon l'une quelconque des revendications précédentes, comprenant en outre
au moins un capteur de luminosité pour déterminer la luminosité, en particulier dans l'environnement de l'insecte,
au moins un dispositif de traitement de données agencé et conçu pour la comparaison de la luminosité, en particulier déterminée avec l'au moins un capteur de luminosité, dans l'environnement de l'insecte avec l'intensité d'éclairage de la source de lumière éblouissante ou les intensités d'éclairage, en particulier réglables, de la source de lumière éblouissante,
et éventuellement au moins une unité de régulation pour régler l'intensité d'éclairage de la source de lumière éblouissante et/ou éventuellement un dispositif d'affichage ou de sortie.

7. Dispositif actif de capture d'insectes selon la revendication 6, **caractérisé en ce que** l'au moins un dispositif de traitement de données est agencé et conçu pour déterminer une probabilité de capture de l'insecte par la comparaison de la luminosité dans l'environnement de l'insecte avec l'intensité d'éclairage de la source de lumière éblouissante, dans lequel le dispositif de traitement de données est de préférence relié ou peut être relié au dispositif d'affichage, en particulier à un écran, ou au dispositif de sortie, qui sont respectivement conçus et agencés pour afficher ou indiquer la probabilité de capture.

8. Dispositif actif de capture d'insectes selon l'une quelconque des revendications précédentes, comprenant en outre
un dispositif de génération d'énergie et/ou un accumulateur d'énergie, avec lequel l'au moins une source de lumière éblouissante est alimentée en énergie.

9. Kit comprenant le dispositif actif de capture d'insectes selon l'une quelconque des revendications 1 à 8 et un aspirateur, en particulier dans lequel le dispositif de capture d'insectes peut être fixé ou est fixé à l'extrémité d'un tube d'aspirateur.

10. Procédé de capture d'insectes avec un dispositif de capture d'insectes, en particulier avec le dispositif actif de capture d'insectes selon l'une quelconque des revendications 1 à 8 ou le kit selon la revendication 9, comprenant au moins une source de lumière éblouissante et un piège à insectes, dans lequel le procédé présente les étapes suivantes :
1) localisation d'un insecte sur une surface,
2) éblouissement de l'insecte avec l'au moins une source de lumière éblouissante,
3) rapprochement supplémentaire du dispositif de capture d'insectes de l'insecte ébloui,
4) réception de l'insecte avec le piège à insectes.

11. Procédé selon la revendication 10, **caractérisé en ce que**
la capture de l'insecte ne nécessite pas de pose du dispositif de capture d'insectes, en particulier de l'ouverture de capture, sur la surface.

12. Procédé selon la revendication 10 ou 11, **caractérisé en ce que**
entre les étapes 3) et 4), un réflexe d'alignement de l'insecte est déclenché par la venue en butée de l'insecte avec le tube de réception et/ou par la disparition du cône d'éblouissement.

13. Procédé selon l'une quelconque des revendications 10 à 12, comprenant en outre les étapes, en particulier entre les étapes 1) et 2) :
a) détermination de la luminosité dans l'environnement de l'insecte,
b) comparaison de la luminosité déterminée dans l'environnement de l'insecte avec l'intensité d'éclairage de la source de lumière éblouissante ou les intensités d'éclairage, en particulier réglables, de la source de lumière éblouissante,
c) détermination d'une probabilité de capture sur la base de la comparaison effectuée selon b),
d) affichage ou sortie de la probabilité de capture déterminée.

14. Utilisation d'un dispositif de capture d'insectes, en particulier selon l'une quelconque des revendications 1 à 8, ou d'un kit selon la revendication 9 comprenant au moins une source de lumière éblouissante pour la capture active d'insectes, de préférence dans laquelle l'insecte est ébloui avant la capture avec la source de lumière éblouissante.

15. Utilisation selon la revendication 14, **caractérisée en ce que** il s'agit d'un dispositif de capture d'insectes selon l'une quelconque des revendications 1 à 8 ou d'un kit selon la revendication 9 et une utilisation pour la capture d'insectes a lieu au moyen d'un aspirateur sur lequel le dispositif de capture d'insectes est monté.
